# EUROPEAN PATENT APPLICATION

(11) **EP 2 098 113 A2**
(43) Date of publication of application: **09.09.2009**
(21) Application number: 09164254.6
(22) Date of filing: 27.10.2003
(51) Int. Cl.: A01K 13/00, A61D 7/00, A61M 11/00, B05B 5/025, B05B 5/043

(54) **Electrohydrodynamic spray for treating non-human animals**

(30) Priority: 25.10.2002 US 421229 P
(62) Divisional of application: 03809637.6
(71) Applicant: BATTELLE MEMORIAL INSTITUTE, Columbus, OH 43201-2693 (US)
(72) Inventor: Graham, Brian, Dublin, OH 43016 (US)
(74) Representative: Clark, Jane Anne

(57) **Abstract**

A spray is disclosed which utilizes charged material, created with the use of electrohydrodynamic (EHD), or electric field effect technology (EFET), to apply pesticides, other therapeutic products, or cosmetics to non-animals. In particular, the instant invention relates to the application of certain active ingredients, solvents, spreading oils, colorants, preservatives, thickeners, carriers, or other compounds in a uniform manner so as to minimize dermal reactions, increase efficacy, reduce dosage, and improve ease of use, safety, and convenience.

## Description

This application claims priority to Provisional Application No. 60/421,229 filed October 25, 2002, now abandoned, which contents are incorporated by referenced as if fully rewritten herein.

### FIELD OF THE INVENTION

The instant invention relates to the use of electrohydrodynamic (EHD), or electric field effect technology (EFET), to apply pesticides, other therapeutic products, or cosmetics to animals. In particular, the instant invention relates to the application of certain active ingredients, solvents, spreading oils, colorants, preservatives, thickeners, carriers, or other compounds in a uniform manner so as to minimize dermal reactions, increase efficacy, reduce dosage, and improve ease of use, safety, and convenience.

### BACKGROUND OF THE INVENTION

Various application techniques exist to apply pesticides and other therapeutic materials to non-human animals, including aerosols or sprays, spot-on or pour-on (collectively, spot-on) liquids, shampoos, fixed-form collars, dusts, and powders. Each of these application methodologies, however, has inherent limitations. For example, sprays can be noisy and startle some animals. Animals typically have an adverse reaction to noises, and particularly to unfamiliar noises. Thus, the hum or hiss or a conventional spray mechanism may frighten the animal and cause it to become agitated and/or attempt to move away. Such behavior can be stressful and potentially dangerous to the animal itself as well as to the user. Cats, in particular, have been known to become extremely agitated and/or run and hide when even a pump spray is used. Horses have been known to exhibit strong negative reactions.

In addition, particle size distribution of a conventional spray is generally very broad and not well-controlled, often resulting in small, potentially respirable particles (*i*.*e*., typically, less than about ten microns) as well as relatively large particles. Particles less than about ten microns may be small enough to pass through the nasal and upper respiratory tract of the animal or the user and reach the lungs. However, respirable particle size does vary depending on the specific animal.

Relatively larger particles generated by conventional spraying techniques can also deliver undesirable concentrations of the material to the target area or section of the animal where material is applied. Rather than delivering an efficacious dosage to the animal, material may run off of the animal, bounce off the surface of the animal, or not strike the animal at all and fall to the ground or land on other nearby surfaces. These problems are caused by generally larger particle sizes, broader particle size distributions which include larger particle sizes, high momentum imparted to the particles or material being sprayed, and generally less-than-optimal or poor adhesion of the particles to the animal. As well, inaccurate or inconsistent user technique in application can be a source of dosing issues. In addition to any potential environmental and exposure issues, valuable material may be wasted.

Finally, coverage using conventional spray techniques is particularly dependent upon user technique. Combined with the problems associated with large particles, less-than-optimal user technique can result in irregular, uneven, and inadequate concentrations of material, especially in sensitive areas or in hard-to-reach areas such as the underside or remote areas of the animal such as the legs. As well, localized dermal reactions or skin-sensitive interactions can result from higher concentrations of material.

Skin sensitivity includes "dermatitis" (an inflammation of the skin) and can include all reactions of the skin (dermis) to foreign materials - from simple irritation to immune responses and various skin diseases. Skin sensitivity can be a problem with certain spot-on liquid products which require a concentrated formulation to be placed on the skin of the animal, usually between the shoulder blades or at additional locations along the spine of the animal to the base of the tail, and allowed to "translocate", or migrate, via surface or subcutaneous migration to other areas of the body. In addition, especially with surface migration, a natural concentration gradient is created from an area of higher concentration where the material was initially placed to areas remote from the application site such as the legs, head, and tail. Conventional sprays, too, with larger particle sizes and broad particle size distribution, can present similar concentration-gradient problems. Thus, particle size, product concentration, or user error can cause some areas to receive a higher-than-desirable concentration, while others receive a suboptimal quantity of material needed to provide desired efficacy.

Convenience and safety are other potential issues with spot-on techniques. Spot-on formulations, while not generally regarded as inconvenient or unsafe, put the user at risk of contamination by contact with relatively highly-concentrated material. By the nature of their application technique and packaging, spills are always a possibility. Further, there is a risk of absorption through the skin of the user. Finally, immediately following the application of spot-on material, and for some time thereafter until sufficient translocation occurs, a small pool of the material remains on the surface of the animal. During that time, the animal may shake and shed a portion of the material from itself and possibly onto surfaces in the surrounding environment. A portion of the material deposited in a spot-on treatment may also rub off on surfaces with which the animal comes into contact.

Shampoos are particularly inconvenient to apply to animals. While allowing the material to be applied thoroughly to all surfaces of the animal, they often require the user to become at least partially immersed in the material. Generally, the shampoo should contact the animal for at least ten minutes before rinsing. Even so, subsequent rinsing can later wash away enough of the material to significantly reduce the efficacy of the treatment.

Powders are generally sprinkled on the animal. Since this method relies upon gravity, generally only the top surface of the animal receives an efficacious treatment. It is also common for material to "billow" into the air where it can be inhaled by either the animal, the user, or both. In addition, the user may be required to manually disperse the powder throughout the coat of the animal, resulting in further exposure to the individual user who is treating the animal. Powders are labeled to be applied in a well-ventilated area and are not recommended for a user with a respiratory disease, such as asthma.

Collars, while they can be very convenient, are generally not as effective as other treatment techniques and generally contain highly toxic active ingredients. And, like spot-on treatments, dermal reactions and skin irritation at the collar site may also be a problem.

Some formulations are simply not particularly suitable for conventional application techniques. It is generally known, for example, that when applying pyrethroid pesticides, an effective class of insecticides, a dermal reaction may result. Not only are dermal reactions a potential problem, low-volume or highly concentrated oil-based formulations are not practical when using conventional spray technologies. The structure of many conventional sprayers often either quickly exhaust or cannot pick up and spray the small volumes of concentrated material. Finally, in cases where alcohol-based formulations are used, conventional spraying can create irritation as well as a "chilling effect" on the skin of the animal via evaporative cooling.

Therapeutic agents are known for treating animals where the agent is absorbed through the skin. However, despite precautions, the process is frequently messy, and the applicant human is easily dosed, with unwanted side effects. For example, transdermal delivery of anti-inflammatory agents to horses involves bulk application of therapeutics conveyed through highly dermal transportatable solvent such as DMSO. Despite use of gloves, trainers are easily dosed and can suffer unwanted side effects.

Conventional cosmetic products for animals also are known, which are messy, and which are difficult to control as desired. For example, shampoos and other cleaning or antiseptic solutions, and detanglers (such as dog or cat hair or horse tail detanglers), hoof colorants, and sheen products for show animals can be difficult to control and apply evenly, and can even become dangerous. For example, sheen products placed in the tack area on a horse can cause saddles to slip during a performance. Tighter control of location and amount of these cosmetics is desirable.

Thus, there is a need for a process for treating animals with pesticides, therapeutic products, or cosmetics that overcome the problems associated with conventional application techniques. In addition, there are materials and formulations which cannot be applied at all using conventional techniques. Applicants have invented, as described herein, a process employing EHD technology which overcomes many of the limitations inherent in existing animal-applied material application methods.

### SUMMARY OF THE INVENTION

EHD spraying is a process whereby bulk solutions, suspensions, or emulsions are broken up, or comminuted, with minimal noise, using electrical forces. With EHD, particles, droplets, fibril, or fibers of narrow and repeatable size distributions are created. In addition, the absence of high velocity fluid moving through a critical orifice under pressure allows for virtually silent operation. In a typical EHD spray nozzle, the material to be sprayed flows through a region of high electric field strength. In doing so, the material acquires an electric charge which induces a force that acts in opposition to the surface tension of the material. The surface charge on the material causes the formation of at least one ligament or thin jet of material which subsequently comminutes, or breaks up, into particles, droplets fibrils, or fiber. In a preferred mode, as the material exits the nozzle or spray site, the repelling forces of the surface charge balance against the surface tension of the material, and a cone, known as a Taylor cone, is formed. The tip of the cone has the greatest concentration of charge, and, at that point, the electrical forces overcome the surface tension, generating the thin jet of material. The jet breaks up, or comminutes, into material of generally uniform size. In some applications, it is advantageous to maintain the imparted electrical charge on the material. For example, charged material is readily attracted to the target and tends to adhere to the target more completely. In certain applications, however, the charge may be undesirable and exposing the particles, droplets, fibril, or fibers to a stream of ions having an opposite polarity discharges them. The charged material may also be discharged by subjecting them to other, oppositely-charged material of the same or different composition as taught in U.S. Pat. Nos. 5,915,377 and 6,252,129, both to Coffee. As the oppositely-charged materials attract each other and collide, the net charge on each particle is reduced or neutralized.

In the case of charged particles, droplets, fibrils, or fibers, the charge causes them to seek a ground. In the instant application, the animal provides such a ground and the material is thus attracted and adheres to the animal. As a section of the animal becomes coated with the material, subsequent application of charged material is, by virtue of the relative electrostatic potential between coated sections and uncoated sections, preferentially attracted to an uncoated section and more uniform coverage is achieved. This characteristic can overcome some of the variance in application results due to user technique.

Because the charged material preferentially deposits on the animal, waste and overspray are substantially reduced. Importantly, these electrostatic effects help treat the underside of the animal and other hard-to-reach areas as desired. The charged material tends to provide a "wraparound" effect. That is, particles, droplets, fibrils, and fibers can travel under the animal or around a leg, for example, by following the electric field created between the device and the animal, to adhere to those sections of the animal. A further advantage of charged material is that it tends, due to their like charge, to spread apart and not agglomerate or coalesce to form larger-than-desirable particles, droplets, fibrils, and fibers. This quality also targets a larger surface on the animal, resulting in quicker application. After reaching the animal, the material ultimately loses its charge over a generally short timeframe.

A wide variety of formulations, for example, aqueous-based, oil-based, and organic solvent-based formulations, with and without surfactants, are advantageously deliverable with EHD technology. Pesticide formulations, for example, not otherwise sprayable, may be applied using EHD in accordance with this application, including, but not limited to, materials for treatment of animal parasites. Further, using EHD, compounds from one class of chemistry are deliverable in conjunction with compounds from another class of chemistry. Thus, if desired, a broader spectrum of pest control is possible, depending upon the combination of compounds applied. As well, formulations of compounds (*e*.*g*., pyrethoids) which, if concentrated on the skin of the animal, produce adverse reactions, may be applied more uniformly using EHD without causing localized dermal reactions.

Other materials, such as contact or systemic therapeutic agents or cosmetic materials are also deliverable with EHD technology. Therapeutic agents include, by way of example only, and not limitation, veterinary biologics, health supplements and pharmaceuticals, including, but not limited to, animal vaccines, antibiotics, anti-inflammatories, chronic care medications, hormones, vitamins, birth control assistance drugs, and growth enhancers. Particularly, those that are transported transdermally are advantageously and more uniformly applied using EHD. Cosmetic agents are those that modify the visual or tactile appearance of the animal, or its scent, and include, for example, cleaning agents, colorants, sheen enhancants, hair straightening compounds, hair detangling agents, deodorants, odorants and pheromones. These are often used for show animals, breeding, or improving quality of care.

EHD also enables the user to apply an effective amount from an ultra-low volume of material and/or concentrated material using an aqueous-based, oil-based, or organic solvent-based formulation.

When treating a single animal by hand, a light-weight, convenient handheld device is preferred. Preferably, the device comprises a power source (*e*.*g*., a 9V battery), at least one high voltage converter, one or more switches, one or more reservoirs for the material(s) to be applied, and a nozzle assembly comprising one or more EHD nozzles or spray sites - all enclosed within a housing. More preferably, the device comprises a cartridge which comprises one or more reservoirs and, more preferably, a set of EHD nozzles, and a low-cost pump. The cartridge may be reusable or disposable. Several such devices are known in the art, such as those shown in U.S. Pat. Nos. 4,580,721 to Coffee et al., 6,302,331 to Dvorsky et al., and 6,318,647 to Gaw et al. which are incorporated herein by reference.

Thus, through EHD technology, materials are quietly produced which are characterized by particles, fibrils, or fibers having a narrow or tailored size distribution and flowrates, as well as greater uniformity in composition and diameter, all of which may be more precisely controlled, and targeted for use in treating non-human animals

### BRIEF DESCRIPTION OF THE DRAWINGS

Fig. 1 is an illustration of a user treating a horse utilizing a prior art technique.
Fig. 2a is an illustration of a user treating a horse utilizing the technology of the present invention.
Fig. 2b is an illustration of a user treating a portion of a horse showing the "wraparound" effect.

### DETAILED DESCRIPTION OF THE INVENTION AND BEST MODE

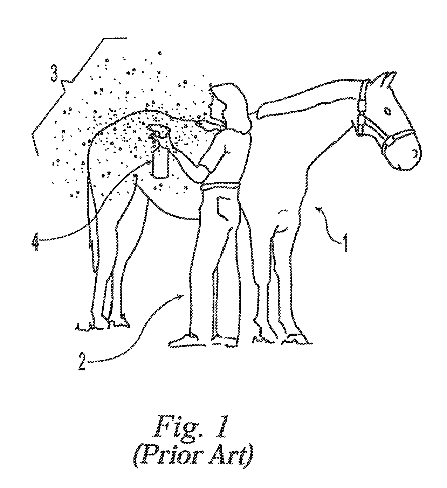

As shown in Fig. 1, one aspect of the prior art utilizes a conventional spray device 4 operated by a user 2 to spray an animal 1 (a horse shown for illustration only). As shown, the resultant spray 3 covers a large area and is composed of material of widely varying diameters.

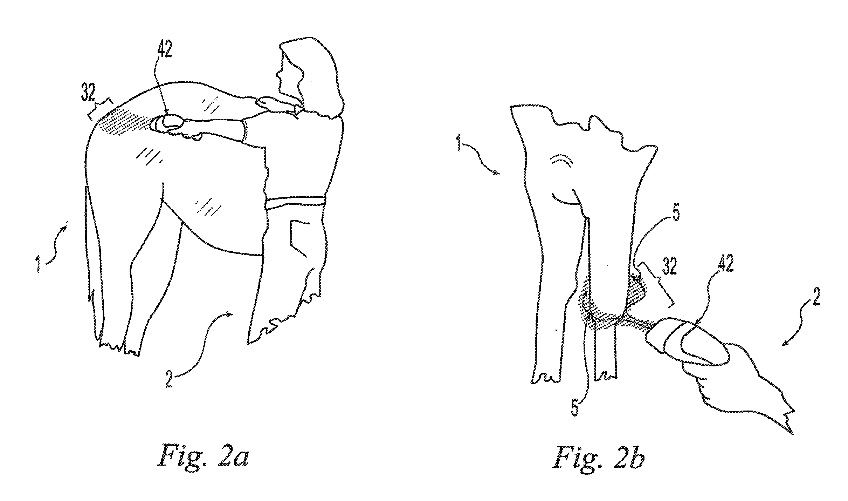

Fig. 2a shows a user 2 spraying an animal 1 with a spray device 42 utilizing the technology of the present invention. As shown, the resultant spray 32 is directed toward a target area of the animal 1. Note that the spray device 42 does not touch the animal 1 and preferably does not touch the animal 1. The resultant spray 32 is composed of droplets having a controllable size and a narrow size distribution.

Fig. 2b shows the wraparound effect as illustrated by direction arrows 5. Thus, the spray 32 is able to reach hard-to-reach areas for proper and uniform coverage.

In one aspect, the instant invention provides a process for treating a non-human animal 1 creating a first quantity of charged material comprising at least one additive chosen from the group consisting of pesticide, therapeutic agent adapted for trans-dermal delivery, and cosmetic agent, and directing the charged material toward the animal. As noted herein above, the material may be in the form of particles, droplets, fibrils (fiber fragments), and fibers. Depending upon the formulation, the material may begin as a droplet or semi-liquid, gel-like or dry material and arrive at the target animal as a liquid, semi-liquid, or dry material. In directing the charged material, the direction of the charged material is preferably oriented in a generally horizontal or downward direction and preferably less than about twelve inches from the animal and more preferably less than about ten inches and more preferably less than about eight inches. At least 90 percent, preferably 95 percent, and more preferably up to 99 percent, by volume of the charged material created adheres to the animal. In another aspect of the present invention, the material so created is partially or completely electrically discharged prior to reaching the target area of the animal. Regardless, in the preferred embodiment, the material, charged or not charged, is created with EHD.

In a further aspect, the material so created has a diameter greater than that which is respirable by the animal 1. A narrow particle size distribution and consistent "pre-designed" particle size can significantly eliminate the risk of inhalation toxicity and provide for uniform delivery of an additive. Particle size and particle size distribution may be varied widely to meet the needs of specific applications. Thus, the dimensional control available using EHD also protects the user 2 from respirable material. In this regard, about 99 percent by volume of the material is greater than about ten microns in diameter, more preferably greater than about 20 microns in diameter, still more preferably greater than about 35 microns in diameter, and even more preferably greater than about 50 microns in diameter. Typically, EHD spraying is capable of creating a low-momentum spray. This is an advantage when EHD sprays designed to produce larger particles are used, as they will adhere readily to the target animal 1 due to a combination of charge and low momentum.

In a further aspect, control and tailoring of the spray distribution is possible with EHD and the material so created may have a substantially log normal distribution. In many applications, it is preferable to have a geometric standard deviation of less than about 2.0, more preferably less than about 1.4 and even more preferably less than about 1.2. The latter geometric standard deviation indicates that the material can be produced essentially as a nearly mono-dispersed spray. A mono-dispersed spray may be of value in some applications where an optimal material diameter enhances the efficacy of the material being sprayed. Equally useful are bi-or multi-modal distribution sprays when tailored for a specific application. The EHD process permits not only control by design of the mean diameter, but of other dimensional characteristics of a particle, droplet, fibril, or fiber. There are many factors in equipment and formulation design which may be adjusted, including, but not limited to, varying the flowrate, the nature of the fluid being sprayed, and the design of the nozzle or spray sites. Others are discussed in the known literature and in U.S. Pat. No. 6,503,481 to Thurston et al.

Materials supplied to an EHD device 42 may be oil-based, aqueous-based, or organic solvent-based formulations. Organic solvents sprayable by EHD for the present applications include, by way of example and not limitation, plant oils, dimethyl sulfonate, isopropyl alcohol, acetone, hydrocarbons, and ethyl acetate. Many formulations preferably contain at least one surfactant. By way of example only, and not limitation, exemplary surfactants include Brij® 93, Brij® 97, and Tween® 80 from Uniquema and Ethoduomeen® T/13, Ethomeen® S/12, Ethomeen® S/15, and Ethomeen® S/25 from Akzo-Nobel USA.

In a further aspect of the present invention, low noise is a benefit of EHD in its use with animals 1. Creating a quantity of charged material 32 with EHD does generate an acoustic emission, however, its frequency range and low volume is such that it has not provoked fight or flight response in animal tests with a horse. An EHD technique was used to apply a pesticide to a horse with little or no reaction from the animal. This is in sharp contrast to the strong negative reactions of some animals, such as cats, when exposed to conventional spray techniques which create noise and/or hiss. As well, the low momentum which is possible with an EHD-generated spray also created no reaction from the test horses.

In accordance with the present invention, multiple active ingredients in separate formulations or, alternatively, multiple components or a single formulation, may be delivered at the same time without the need to pre-mix them in a solution. The pre-mixing of active ingredients, formulations, or formulation components at the actual time of application, or the mixing of formulations while in the air is within the capability of EHD technology. A "twin nozzle" or dual-spray site design is known from which one may spray one solution with multiple components or two or more components separately but simultaneously and either mix "in air" or just prior to atomization. See, U.S. Pat. Nos. 5,915,377 and 6,252,129 both to Coffee, which are incorporated herein by reference. Thus, for example, a compound from one class of chemistry (*e*.*g*., imidacloprid from the class of neo-nicotinoids) could be delivered in conjunction with, in a combined formulation, or separately, a compound from another class of chemistry (*e*.*g*., flumethrin from the class of pyrethroids). As a result, a broader spectrum of pest control is potentially possible, depending upon the combination of products applied. For example, combining a neo-nicotinoid and a pyrethroid would provide both tick and flea control simultaneously. This enables chemistries having different modes of action or different systemic capabilities to be combined to enhance the spectrum, effectiveness, and/or efficiency of pest control on animals.

In a further aspect of the present invention, creating charged material having low momentum toward a targeted area of the animal 1 permits the charged material to distribute itself upon the targeted area of the animal 1 in accordance with the charge on the material 32. In this regard, the charged material 32 may be generally uniformly distributed upon the targeted area of the animal 1, or, viewed differently, an additive in the material may be more uniformly distributed upon the targeted area of the animal 1. Preferably, distributing the additive upon the targeted area of the animal 1 is in an amount or concentration less than that which would produce dermatitis in at least a portion of the target area. In addition, the attraction of charged material to the nearest earth or ground, which will be the animal 1, minimizes spray drift potential.

In directing the charged material toward an animal 1 in accordance with one aspect of the present invention, at least a portion of the charged material may travel along generally curved trajectories 5 to non-planar surfaces of the animal 1, and wrap around or under surfaces not in a direct line-of-sight to the EHD device.

In a further aspect of the present invention, the animal 1 can be directed to travel along a defined path, such as a chute, wherein at least a portion of the outer periphery of the animal receives at least a portion of the charged material. Similarly, the animal 1 could be passing through a door, gate, or other defined path and the spray-creating device positioned to be manually operated or automatically triggered to spray the animal.

A preferred nozzle design was used to treat a horse in accordance with the present invention to achieve these and other benefits of the present invention discussed herein. The nozzle (not shown) included a generally circular arrangement of eight spray sites spaced approximately one-half inches apart along the circumference of a circle approximately 1.1 inches in diameter. Each spray site has an inside diameter of 0.020 inch and an outside diameter of 0.032 inch and is about 1 inch long. The total flow rate is about 150 µl/see. See, also, for example, U.S. Pat. Nos. 4,962,885 and 6,252,129, both to Coffee, which are incorporated herein by reference.

The step of directing an EHD spray of material may include directing the charged material 32 onto a target area of the animal 1 which is substantially comprised of fur. Fur, as used herein, includes the hair of a dog, cat, horse, and other similarly-coated animals. In addition, the outer periphery, or the outer skin or fur, of the animal 1 may be the target. The generation of charged material, such as a particle, droplet, fibril, or fiber, within a certain distance range from the target animal 1 will, by electrical forces, attract itself and adhere to fur or hair, thus maximizing penetration of the spray.

In a further aspect, the step of directing comprises depositing the charged material onto selected areas of preferably healthy tissue on the outer periphery of the animal 1 and may consist more generally of distributing the charged, uncharged, or partially charged material in the general proximity of the animal, whereby contact with at least a portion of the quantity of material is assured. This approach to spraying can include fogging using EHD, which allows the fog of material to be designed to avoid inhalation hazards for the animal as well as the user.

The application of material to the external periphery of an animal, on fur or dermal surfaces, permits pesticide and therapeutic products to target parasites known to infest animals. Ectoparasites which may be treated in accordance with the present invention include both insects and arachnids such as, but not limited to, lice, fleas, flies, mosquitoes, and ticks. Endoparasites include all parasites that are found in the intestines, blood, or tissue of an animal, such as, but not limited to, hookworms, roundworms, whipworms, tapeworms, heartworms, and other nematodes. EHD allows certain skin-sensitive active ingredients, solvents, spreading oils, and other materials to be applied in a uniform manner, thus minimizing skin sensitivity to the animal. By way of example only, certain active ingredient compounds in the pyrethroid class of chemistry, which are known for causing skin-sensitivity reactions, may be applied via the delivery of small charged material over a large surface area. Thus, by delivering, via EHD, a predetermined dose of a pyrethroid uniformly over a large target area, as opposed to a localized, concentrated spot-on treatment, there is a significant and more uniform dosage of active ingredient and consequently more controlled and desirable dose concentration on the skin of an animal.

In an alternative embodiment, the process may further comprise creating a second quantity of charged material (not shown) and directing the second quantity of charged material toward the animal 1. The second quantity of material may also contain at least one additive chosen from the group consisting of pesticide, therapeutic agent, and cosmetic agent. The step of creating the first quantity and the step of creating the second quantity may be performed concurrently for a least a period of time. In the alternative, the steps of creating the first quantity and the second quantity may be performed alternately. In a further embodiment, the first quantity of charged material and the second quantity of charged material are created with opposite charges. As with the step of creating the first quantity, the step of creating the second quantity may be effected with EHD or without EHD.

The process of the present invention may also be used for treating a non-human animal with charged material containing a therapeutic agent adapted for transdermal delivery of veterinary and other compounds through the skin of the animal. Therapeutic agents include, but are not limited to, veterinary biological, health supplements, or veterinary pharmaceutical products such as, but not limited to, animal vaccines, antibiotics, anti-inflammatories, chronic care medications, hormones, vitamins, birth control or assistance drugs, and growth enhancers.

Finally, the process may be used for treating a non-human animal 1 with charged material comprising at least one cosmetic agent, such as, but not limited to, those listed herein above.

In a preferred, embodiment, the charged material is created with a handheld EHD device. Illustrative of devices are those shown in U.S. Pat. Nos. 6,302,331 to Dvorsky et al. and 6,318,647 to Gaw et al. Preferably, such devices include at least one reservoir of fluid including at least one of the at least one additives described herein above, such as a pesticide, therapeutic agent, or cosmetic. Preferably the reservoir comprises a replaceable cartridge containing the reservoir. Replaceable cartridges are shown in U.S. Pat. Nos. 4,580,721 to Coffee et al., 4,962,885 to Coffee, and 6,318,647 to Gaw et al. In another embodiment, pre-measured cartridges containing formulations including a compound or compounds to be delivered, may be inserted into a device and subsequently sprayed on the target animal. Alternatively, controlled dosing may be accomplished via time-based application, and/or predetermined dose delivery flowrates.

Finally, the present invention is particularly applicable to treating companion animals. Companion animals, as used herein, are animals which are not intended to be a feed animal, such as, but not limited to, dogs, cats, horses, fish, reptiles and domestic birds. Geographic and cultural preferences may influence the definition of a companion animal in a given household.

It will be understood that the embodiments of the present invention which have been described herein are illustrative of some of the applications of the principles of the present invention. Various modifications may be made by those skilled in the art without departing from the true spirit and scope of the invention.

### THE DISCLOSURE OF THIS APPLICATION ALSO INCLUDES THE FOLLOWING NUMBERED CLAUSES:

1. A process for treating a non-human animal comprising: creating a first quantity of charged material comprising at least one additive chosen from the group consisting of pesticide, therapeutic agent adapted for transdermal delivery, and cosmetic agent and directing the charged material toward the animal.
2. The process of clause 1, wherein the step of creating charged material includes creating charged material using EHD.
3. The process of clause 1 wherein the step of creating further includes creating uncharged material.
4. The process of clause 3 wherein the step of creating further includes creating uncharged material using EHD.
5. The process of clause 1 where in the step of creating comprises creating charged material having a diameter greater than that which is respirable by the animal.
6. The process of clause 5, wherein about 99 percent by volume of the material is greater than about ten microns in diameter.
7. The process of clause 5, wherein the step of creating comprises creating by a human, and the diameter is greater than that which is respirable by a human.
8. The process of clause 1, wherein the step of creating comprises creating material having a substantially log normal distribution with a geometric standard deviation of no greater than about 2.0.
9. The process of clause 1, wherein the step of creating comprises selectively creating material using EHD substantially having a pre-determined size and size distribution.
10. The process of clause 1, wherein the step of creating includes first providing a supply of a formulation from which the material is created, the formulation comprising at least one carrier chosen from the group consisting of aqueous-based, oil-based, and organic solvent-based.
11. The process of clause 10, wherein the formulation comprises a surfactant.
12. The process of clause 1, wherein the step of creating a quantity of charged material generates an acoustic emission that does not provoke an adverse reaction in the animal.
13. The process of clause 1, wherein the step of directing includes distributing the charged material generally uniformly upon a targeted area of the animal.
14. The process of clause 1, wherein the step of creating includes creating charged material having momentum towards a targeted area of the animal, the momentum adapted so that the step of directing includes distributing the charged material upon a targeted area of the animal in accordance with the charge on the material.
15. The process of clause 1, wherein the step of directing the charged material comprises distributing the additive generally uniformly upon a targeted area of the animal.
16. The process of clause 1, wherein the step of directing includes distributing the additive upon a targeted area of the animal in an amount less than that required to produce dermatitis in any portion of the targeted area.
17. The process of clause 1, wherein the step of directing includes adhering at least 95 percent by volume of the charged material to the animal.
18. The process of clause 1, wherein the step of directing the charged material includes distributing portions of the charged material along generally curved trajectories to non-planar surfaces of the animal.
19. The process of clause 1, wherein the step of directing includes a least a portion of the charged material following a substantially curved trajectory around a portion of the animal.
20. The process of clause 1, wherein the animal comprises a companion animal.
21. The process of clause 1, wherein the step of directing includes inducing the animal to move along a path in which at least a portion of the outer periphery of the animal receives at least a portion of the charged material.
22. The process of clause 1, wherein the step of creating includes creating the charged material using a hand-held device.
23. The process of clause 1, wherein the step of directing includes directing the charged material onto a target area of the animal substantially comprising at least one from the group consisting of fur, feathers, scales, or wool.
24. A process for treating a non-human animal comprising: creating a quantity of charged material comprising a pesticide and directing the charged material toward the animal.
25. The process of clause 24 wherein the step of creating comprises creating the charged material using EHD.
26. The process of clause 24, wherein the pesticide is chosen from the group consisting of insecticides, acaricides, miticides, and nematocides.
27. The process of clause 24, wherein the pesticide comprises both a neo-nicotinoid and a pyrethroid.
28. The process of clause 27, wherein the step of creating comprises creating a quantity of neo-nicotinoid and a quantity of pyrethroid from at least two spray sites.
29. The process of clause 28, wherein the step of creating from at least two spray sites includes alternately creating the quantity of neo-nicotinoid and the quantity of pyrethroid.
30. The process of clause 28, where the step of creating further includes at least partially discharging at least one of the quantity of neo-nicotinoid and the quantity of pyrethroid.
31. The process of clause 28, wherein the step of creating comprises creating using EHD.
32. The process of clause 24, wherein the step of creating comprises creating two quantities of pesticides, including: creating a quantity of a first pesticide having a carrier chosen from the group of carriers consisting of aqueous-based, oil-based, and organic solvent-based and creating a quantity of a second pesticide having a carrier chosen from the group of carriers consisting of aqueous-based, oil-based, and organic solvent-based, wherein the carriers of the first and second pesticides are from different ones of the group of carriers.
33. The process of clause 32, wherein: the step of creating comprises creating using EHD and the step of directing includes directing a first pesticide comprising a neo- nicotinoid and directing a second pesticide comprising a pyrethroid toward a target area of the animal.
34. A process for treating a non-human animal comprising: creating a quantity of charged material comprising at least one therapeutic agent adapted for transdermal delivery across the skin of an animal and directing the charged material toward the animal.
35. The process of clause 34, wherein the step of creating comprises creating the charged material using EHD.
36. The process of clause 34, wherein the therapeutic agent is chosen from the group consisting of veterinary biological products, health supplements, veterinary pharmaceutical products, animal vaccines, antibiotics, anti-inflammatories, chronic care medications, vitamins, birth assistance drugs, honnones, growth enhancers, and combinations thereof.
37. A process for treating a non-human animal comprising: creating a quantity of charged material using EHD including a therapeutic agent adapted for use solely on generally intact dermal surfaces, and directing the charged material toward the animal.
38. A process for treating a non-human animal comprising: creating a quantity of charged material comprising at least one cosmetic agent and directing the charged material toward the animal.
39. The process of clause 38 wherein the step of creating comprises creating the charged material using EHD.
40. The process of clause 38, wherein the cosmetic agent is chosen from the group consisting of colorant, sheen enhancer, hair straightening compounds, hair detangling compounds, deodorants, odorants, and pheromones.
41. The process of clause 1, further comprising: creating a second quantity of charged material and directing the second quantity of charged material toward the animal.
42. The process of clause 41, wherein the second quantity of material contains at least one additive chosen from the group consisting of pesticide, therapeutic agent, and cosmetic agent.
43. The process of clause 42 wherein at least one of the steps of creating a first quantity of charged material and creating a second quantity of charged material is performed using EHD.
44. The process of clause 41 wherein the steps of creating a first quantity of charged material and a second quantity of charged material are performed concurrently for a period of time.
45. The process of clause 41 wherein the steps of creating a first quantity of charged material and a second quantity of charged material are performed alternately.
46. The process of clause 41 wherein the steps of creating a first quantity of charged material and a second quantity of charged material are performed by charging the first and second quantities with opposite charges.
47. A process for treating a non-human animal comprising: creating a quantity of material using EHD comprising at least one additive chosen from the group consisting of pesticide, therapeutic agent, and cosmetic agent and directing the material toward the animal.
48. The process of clause 47 wherein the therapeutic agent is adapted for trans-dermal delivery of a substance.
49. The process of clause 47 wherein the step of creating further includes creating charged material, and the step of directing further includes directing the material towards a target area comprising one of the group consisting of fur, feathers, scales, or wool.
50. The process of clause 47, wherein about 99 percent by volume of the material is greater than about ten microns in diameter.
51. The process of clause 47, wherein the step of directing the charged material toward the animal comprises distributing the charged material in proximity of an animal whereby contact by the animal with at least a portion of the quantity of material is assured.

## Claims

1. An electrohydrodynamic spray of electrical charged comminuted material comprising at least one of a pesticide and a therapeutic agent, for use in the treatment of a condition or infestation of a non-human animal by topical application of the spray to the animal.

2. The spray of claim 1, wherein the electrically charged comminuted material comprises at least one of particles, droplets, fibrils and fibre.

3. The spray of claim 1 or 2 for use in the treatment of an infestation by ectoparasites such as lice, fleas, flies, mosquitoes, or ticks, or an infestation by endoparasites such as, hookworms, roundworms, whipworms, tapeworms, heartworms, and other nematodes.

4. The spray of any preceding claim, wherein the electrically charged comminuted material at least one of:
is distributed along generally curved trajectories to non-planar surfaces of the animal;
is at least partially electrically discharged prior to reaching the target area.
has 99 percent by volume greater than about ten microns in diameter;
has a diameter is greater than that which is respirable by a human;
has a substantially log normal distribution with a geometric standard deviation of no greater than about 2.0;
has a diameter greater than that which would be respirable by at least the non-human animal
has a pre-determined size and size distribution.

5. The spray of any preceding claim, wherein the target area of the animal comprises the skin, hair, fur, feathers, scales, or wool of the animal.

6. The spray of any preceding claim, wherein the animal is a companion animal.

7. The spray of any of claims 1 to 6, wherein the animal is a horse.

8. The spray of any preceding claim, wherein the material comprises at least one carrier chosen from the group consisting of aqueous-based, oil-based, and organic solvent-based and optionally the carrier includes a surfactant.

9. The spray of any preceding claim, wherein the spray comprises has first and second different comminuted materials.

10. The spray of claim 9, wherein the first and second comminuted materials are at least one of: alternately or concurrently created; oppositely charged.

11. The spray of any of claims 1 to 8, wherein the electrically charged comminuted material comprises a pesticide chosen from the group consisting of insecticides, acaricides, miticides, and nematocides.

12. The spray of claim 11, wherein the spray comprises has first and second different comminuted materials, the first comminuted material comprises a neo-nicotinoid and the second comminuted material comprises a pyrethroid.

13. The spray of any preceding claim, wherein the condition or infestation is a skin condition or coat infestation.

14. The spray of any of claims 1 to 10, wherein spray has the therapeutic agent and the therapeutic agent is chosen from the group consisting of veterinary biological products, health supplements, veterinary pharmaceutical products, animal vaccines, antibiotics, anti-inflammatories, chronic care medications, vitamins, birth assistance drugs, hormones, growth enhancers, and combinations thereof.

15. The spray of claim 14, wherein the therapeutic agent is for transdermal delivery to the animal.
